# EUROPÄISCHE PATENTSCHRIFT

(11) **EP 3 017 213 B1**
(45) Veröffentlichungstag und Bekanntmachung des Hinweises auf die Patenterteilung: **09.05.2018**
(21) Anmeldenummer: 14729882.2
(22) Anmeldetag: 05.06.2014
(51) Int. Cl.: F16H 13/02, B60K 17/04, F16H 13/10, F16H 37/08

(54) **ELEKTRISCHER ANTRIEB**
ELECTRIC DRIVE
ENTRAÎNEMENT ÉLECTRIQUE

(30) Priorität: 02.07.2013 DE 102013212868
(43) Veröffentlichungstag der Anmeldung: 11.05.2016
(73) Patentinhaber: Volkswagen Aktiengesellschaft, 38440 Wolfsburg (DE)
(72) Erfinder: PETERSEN, Rainer, 38444 Wolfsburg (DE); MÖCKEL, Jörg, 38524 Sassenburg (DE); SUE, Armin, 38527 Meine (DE); STRAUSS, Henning, 31311 Uetze (DE); PLIKAT, Robert, 29369 Ummern (DE)
(86) Internationale Anmeldenummer: PCT/EP2014/061670
(87) Internationale Veröffentlichungsnummer: WO 2015/000658

(56) Entgegenhaltungen:
- EP-A1- 0 211 000
- EP-A1- 1 481 887
- EP-A2- 2 436 950
- WO-A1-2012/171177
- DE-A1-102011 079 975
- US-A- 3 475 993

## Beschreibung

Die Erfindung bezieht sich auf einen elektrischen Antrieb, umfassend
- eine Motoranordnung mit einer Mehrzahl elektrischer Maschinen,
- eine Abtriebsanordnung und
- eine einerseits mit der Motoranordnung und andererseits mit der Abtriebsanordnung verbundene Übersetzungsstufe mit einer mit der Abtriebsanordnung verbundenen Übersetzungs-Sonne und einer Mehrzahl jeweils mit einer der elektrischen Maschinen verbundener Übersetzungs-Planeten, die ringförmig um die Übersetzungs-Sonne angeordnet sind und drehmomentübertragend an ihr abwälzen.

### Stand der Technik

Derartige Antriebe sind bekannt aus der EP 0 211 000 B1. Diese Druckschrift offenbart ein elektromechanisches Präzisionsantriebssystem mit einer Vielzahl einzelner Elektromotoren, die mit parallel ausgerichteten Rotorwellen ringförmig angeordnet sind. Jede Rotorwelle des bekannten Systems trägt ein Stirnrad, welches mit einem gemeinsamen Sonnenrad kämmt, das im Zentrum des von den Planetenrädern gebildeten Rings angeordnet ist. Diese Anordnung dient der Summation der geringen Drehmomente der einzelnen elektrischen Maschinen zu einem hohen Gesamtmoment, welches an der mit der Sonne verbundenen Ausgangswelle abgegriffen werden kann.

Es wäre günstig, dieses sinnvolle Konzept auch auf den Antrieb von Kraftfahrzeugen übertragen zu können. Hierzu wäre insbesondere der Einsatz von sogenannten Höchstdrehzahlmotoren, d.h. elektrischen Maschinen mit Drehzahlen von mehr als 20000 U/min, die sich durch besondere Effizienz und Laufruhe auszeichnen, günstig. Derartige Motoren finden derzeit Anwendung in hochtourigen Werkzeugmaschinen. Das bekannte Präzisionsantriebssystem, ergänzt um Höchstdrehzahlmotoren ist jedoch für die Anwendung als Kraftfahrzeugantrieb nicht ohne weiteres geeignet. Insbesondere liefert es keine hinreichende Übersetzung und auch die sich bei hohen Drehzahlen an den Zahneingriffen ergebende Geräuschentwicklung ist für den Einsatz in Kraftfahrzeugen, insbesondere elektrisch betriebenen Kraftfahrzeugen, nicht akzeptabel.

Es ist die Aufgabe der vorliegenden Erfindung, eine an den Einsatz als Kraftfahrzeugantrieb angepasste Weiterentwicklung des gattungsgemäßen Antriebssystems zur Verfügung zu stellen.

Diese Aufgabe wird in Verbindung mit den Merkmalen des Oberbegriffs von Anspruch 1 dadurch gelöst, dass
- die Übersetzungsstufe ein rotierbar gelagertes Übersetzungs-Hohlrad aufweist, an dem die Übersetzungs-Planeten drehmomentübertragend abwälzen, und
- die Abtriebsanordnung eine Summierstufe aufweist, die ausgebildet ist als ein Ravigneaux-Satz mit einem gehäusefesten Summier-Hohlrad, mit einem Summier-Steg, auf dem zwei miteinander kämmende Sätze von Summier-Planeten, von denen einer mit dem Summier-Hohlrad kämmt, drehbar gelagert sind, und mit zwei Summier-Sonnen, von denen je eine mit einem der Summier-Planetensätze kämmt,
wobei das Übersetzungs-Hohlrad fest mit der einen Summier-Sonne verbunden ist und die Übersetzungs-Sonne fest mit der anderen Summier-Sonne verbunden ist.

Bevorzugte Ausführungsformen der Erfindung sind Gegenstand der abhängigen Ansprüche.

Zunächst ist erfindungsgemäß vorgesehen, die bekannte Übersetzungsstufe zu einer vollständigen Planetenstufe mit eigenem Hohlrad, nämlich dem Übersetzungs-Hohlrad auszubauen. Die Übersetzungs-Planeten sind im Wesentlichen raumfest positioniert. Sie sind auf den Rotorwellen der elektrischen Maschine fixiert. Die elektrischen Maschinen selbst sind an einer Bezugsbasis, insbesondere einem Getriebegehäuse festgelegt. Ein gesonderter Steg, auf dem die Planeten üblicherweise innerhalb einer Planetenstufe gelagert sind, ist daher vorliegend nicht erforderlich. Allerdings ergibt sich aus der raumfesten Anordnung der Übersetzungs-Planeten die Notwendigkeit, das Übersetzungs-Hohlrad drehbar zu lagern.

Die Übersetzungs-Planeten dienen als Eingangselemente der Übersetzungsstufe. Diese weist mit der Übersetzungs-Sonne und dem Übersetzungs-Hohlrad zwei Ausgangselemente auf. Deren Drehzahlen und Momente werden erfindungsgemäß in einer Summierstufe, die als Teil einer nachgeordneten Abtriebsanordnung betrachtet werden kann, aufsummiert. Der Aufbau der Summierstufe entspricht dem eines grundsätzlich bekannten Ravigneaux-Satzes mit gehäusefestem Summier-Hohlrad, zwei Sätzen von Summier-Planeten und zwei Summier-Sonnen, die jeweils mit einem der Summier-Planetensätze kämmen. Diese Summier-Sonnen dienen als Eingangselemente der Summierstufe und sind entsprechend mit den Ausgangselementen der Übersetzungsstufe, d.h. der Übersetzungs-Sonne und dem Übersetzungs-Hohlrad verbunden. Der Summier-Steg, auf dem die Summier-Planetensätze gelagert sind, dient folglich als Ausgangselement der Summierstufe.

Mit dieser besonderen Getriebeanordnung ist es möglich, auf sehr kleinem axialen Bauraum eine hohe Übersetzung zu erzielen, mit der die hohe Drehzahl der Höchstdrehzahlmotoren auf eine für den Abtrieb eines Kraftfahrzeugs angemessene Drehzahl reduziert werden kann. Zugleich behält dieses Konzept den Vorzug der Momentenaddition mehrerer mometenschwacher elektrischer Maschinen zu einem angemessen hohen Drehmoment bei.

Günstigerweise ist die Übersetzungsstufe als Reibrollengetriebe ausgebildet. Der hiermit verbundene konstruktive Aufwand ist im Hinblick auf die deutliche Reduzierung der Geräuschbildung lohnend.

Bei einer bevorzugten Ausführungsform ist das Übersetzungs-Hohlrad mit derjenigen Summier-Sonne verbunden, die mit demjenigen Summier-Planetensatz kämmt, welcher mit dem Summier-Hohlrad kämmt. Dies berücksichtigt in optimaler Weise die unterschiedlichen Drehrichtungen und Drehzahlen, die an den Ausgangselementen der Übersetzungsstufe anliegen, insbesondere in dem bevorzugten Fall, dass die Übersetzungs-Planeten als Stufenplaneten ausgebildet sind, deren Kontaktradius mit der Übersetzungs-Sonne kleiner ist als ihr Kontaktradius mit dem Übersetzungs-Hohlrad.

Zur weiteren Ausgestaltung des Abtriebs sind insbesondere zwei verschiedene Varianten günstig. Bei einer ersten Variante ist vorgesehen, dass der Summier-Steg als Ausgangselement der Summierstufe mit einem Eingangselement eines Differentials verbunden ist, dessen zwei Ausgangselemente mit Antriebsrädern einer angetriebenen Achse eines Kraftfahrzeugs verbunden sind. Diese Variante verkörpert die Anpassung an das herkömmliche Antriebskonzept von Kraftfahrzeugen, bei denen ein zentraler Antrieb ein Differential antreibt, welches das Moment auf die beiden Antriebsräder der angetriebenen Achse verteilt.

Grundsätzlich bestehen hier keine wesentlichen Beschränkungen für die Gestaltung des Differentials. Bei einer konstruktiv besonders einfachen, bauraumsparenden Ausführungsform ist vorgesehen, dass das Differential ein Stirnrad-Differential ist, dessen Eingangselement als ein Differential-Steg ausgebildet ist, auf dem zwei Sätze miteinander kämmender Differential-Planeten drehbar gelagert sind, wobei jeder Differential-Planetensatz mit einem der als Differential-Sonnen ausgebildeten Ausgangelemente des Differentials kämmt. Es ist dies die übliche Bauweise von Stirnraddifferentialen mit zwei Sonnen.

Wie oben bereits erläutert, dient der Summier-Steg als Ausgangselement der Summierstufe. Bevorzugt ist daher vorgesehen, dass der Summier-Steg mit dem Differential, insbesondere dessen Eingangselement, welches bevorzugt der Differential-Steg ist, verbunden ist. Aus dieser Gestaltung ergibt sich die besonders vorteilhafte Möglichkeit, die Summier-Planeten und die Differential-Planeten auf zwei beabstandeten Axialbereichen eines gemeinsamen Steges zu lagern. Mit anderen Worten sind der Summier-Steg und der Differential-Steg als ein gemeinsames Bauteil ausgebildet, was einer besonders bauraumsparenden Konstruktion entspricht.

Bei einer zweiten Variante der Abtriebsanordnung ist anstelle des zuvor erläuterten Differentials vorgesehen, dass der Summier-Steg als Ausgangselement der Summierstufe mit einem Antriebsrad eines Kraftfahrzeugs verbunden ist. Es ist dies die Ausgestaltung der Abtriebsanordnung als Rad-Direktantrieb. Ein solcher Rad-Direktantrieb ist für ein oder mehrere Räder eines Kraftfahrzeugs denkbar. Besonders bevorzugt ist eine Antriebsanordnung für ein Kraftfahrzeug, umfassend zwei antiparallel ausgerichtete elektrische Antriebe dieser Art, deren Summierstufen jeweils mit einem Antriebsrad des Kraftfahrzeugs verbunden sind. Axial besonders bauraumsparend ist dabei eine Anordnung der elektrischen Maschinen beider Radantriebe in einem gemeinsamen Motorenring, wobei jeweils zwei azimutal benachbarte Motoren axial antiparallel orientiert sind. Mit anderen Worten sind die Statoren und Rotoren der beiden Antriebe in einer gemeinsamen Motorringebene angeordnet, wobei die Rotorwellen mit den darauf fixierten Übersetzungs-Planeten in unterschiedliche Richtungen aus dem Motorenring herausragen. Entsprechend sind beiderseits des Motorenrings je eine Übersetzungsstufe und eine Summierstufe angeordnet, wobei letztere mit dem jeweils zugeordneten Antriebsrad des Kraftfahrzeugs verbunden ist. Die Funktion des bei dieser Ausführungsform fehlenden Differentials wird durch geeignete Ansteuerung der unterschiedlichen Antriebe, insbesondere der den unterschiedlichen Antrieben zugeordneten Motoren realisiert. Dabei können auch komplexere, über die herkömmlichen Differentialfunktionen hinausgehende Steuerungen, wie z.B. das sogenannte Torque-Vectoring realisiert werden.

Weitere Merkmale und Vorteile der Erfindung ergeben sich aus der nachfolgenden, speziellen Beschreibung und den Zeichnungen.

Es zeigen:
- Figur 1: eine schematische Schnittdarstellung durch die Übersetzungsstufe einer bevorzugten Ausführungsform der Erfindung,
- Figur 2: eine teilweise geschnittene Darstellung der Motoranordnung einer bevorzugten Ausführungsform der Erfindung in Draufsicht auf deren übersetzungsstufenseitige Stirnseite sowie in Seitenansicht,
- Figur 3: eine perspektivische Darstellung der Motoranordnung von Figur 2 mit dargestellten Exzenterlagern,
- Figur 4: eine schematische Darstellung des die Motoranordnung der Figuren 2 und 3 von der Übersetzungsstufe von Figur 1 trennenden Gehäusedeckels zur Verdeutlichung der Funktion der Exzenterlager,
- Figur 5: eine schematische Darstellung einer ersten Ausführungsform einer Antriebsanordnung unter Verwendung der vorliegenden Erfindung,
- Figur 6: eine schematische Darstellung einer zweiten Ausführungsform einer Antriebsanordnung gemäß der vorliegenden Erfindung.

Gleiche Bezugszeichen in den Figuren deuten auf gleiche oder analoge Elemente hin.

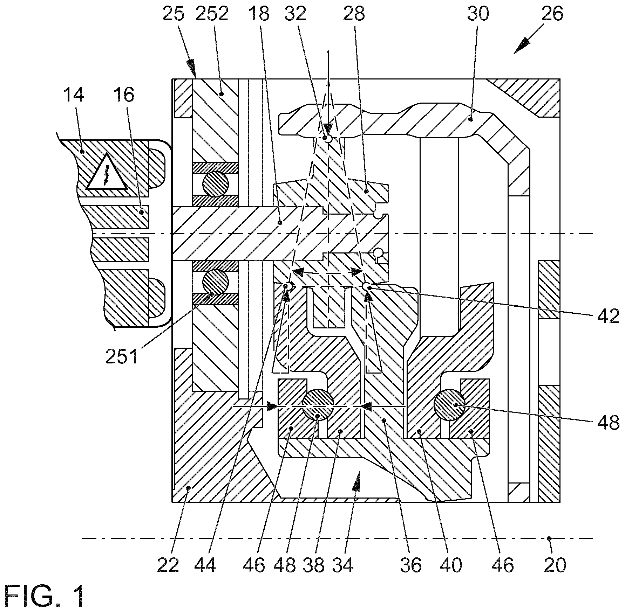

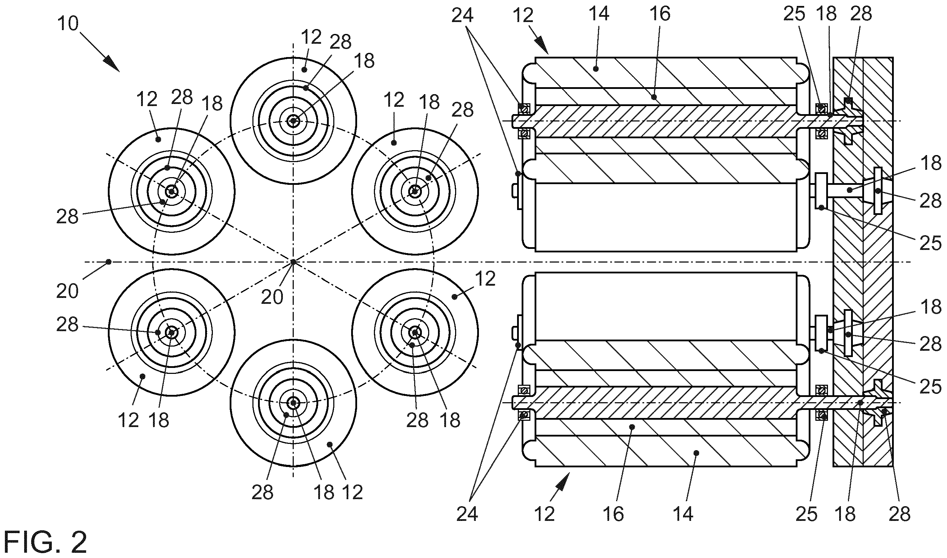

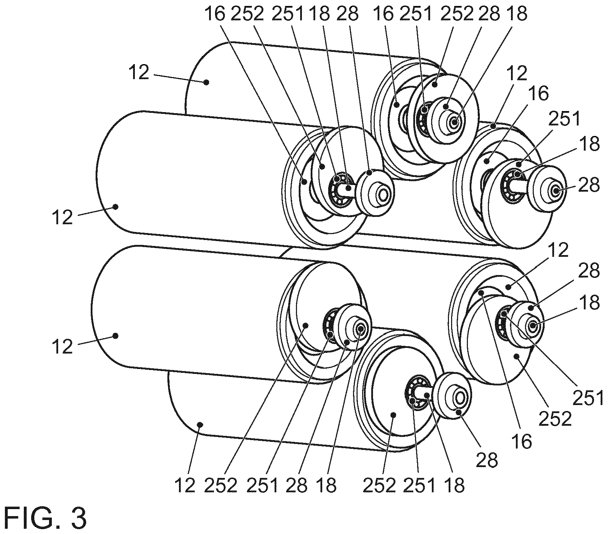

Figur 1 zeigt eine schematische Schnittdarstellung der Übersetzungsstufe eines erfindungsgemäßen Antriebs, die zum leichteren Verständnis günstigerweise gemeinsam mit den Figuren 2 und 3 zu betrachten ist, die auch gemeinsam beschrieben werden sollen. Die insbesondere in den Figuren 2 und 3 verdeutlichte Motoranordnung 10 umfasst eine Mehrzahl (bei der gezeigten Ausführungsform sechs) elektrischer Maschinen 12, jeweils umfassend einen Stator 14 und einen Rotor 16, die mit parallel ausgerichteten Rotorwellen 18 ringförmig um eine Zentralachse 20 angeordnet sind und einen Motorenring bilden. Bei den elektrischen Maschinen 12 handelt es sich vorzugsweise um Höchstdrehzahl-Maschinen, die mit Drehzahlen von über 20000 U/min betrieben werden können. Während die Statoren 14 der elektrischen Maschinen 12 an einem Gehäuse 22 festgelegt sind, sind die Rotorwellen 18 beiderseits der Rotoren 16 am Gehäuse gelagert, wobei auf die spezielle Ausgestaltung der Lager 24, 25 weiter unten detailliert eingegangen werden soll.

Einerseits der elektrischen Maschinen 12 sind deren Rotorwellen 18 verlängert und ragen in eine benachbarte Übersetzungsstufe 26 hinein. Dort tragen sie jeweils einen als Reibrolle ausgebildeten Übersetzungs-Planeten 28, der als Stufenplanet ausgebildet ist und in einem zentralen Axialbereich einen größeren Durchmesser aufweist, als in seinen beidseitig des Zentralbereichs angeordneten äußeren Axialbereichen. Die Übersetzungs-Planeten 28 sind fest auf den Rotorwellen 18 fixiert. Sie bilden gemeinsam das angetriebene Eingangselement der Übersetzungsstufe 26. Diese ist als Reibrollen-Planetenstufe ausgebildet. Radial außen ist ein rotierbar gelagertes Hohlrad 30 angeordnet, welches in einem Kontaktbereich 32 den Zentralbereich des Übersetzungs-Planeten 28 reibschlüssig kontaktiert, sodass es durch die angetriebene Rotationsbewegung der Übersetzungs-Planeten 28 selbst in Rotation versetzt wird. Radial innerhalb der Übersetzungs-Planeten 28 ist eine mehrteilig ausgebildete Übersetzungs-Sonne 34 angeordnet. Diese umfasst eine axial fest und drehbar gelagerte Innensonnenscheibe 36 und zwei ebenfalls rotierbar, jedoch zusätzlich axial verschieblich angeordnete Außensonnenscheiben 38, 40. Der in Figur 1 gezeigte Übersetzungs-Planet 28 ist zwischen der Innensonnenscheibe 36 und der Außensonnenscheibe 38 derart eingespannt, dass beide mit ihren Kontaktbereichen 42, 44 die mit nach außen abfallenden Schultern ausgebildeten äußeren Axialbereiche des Übersetzungs-Planeten 28 reibschlüssig kontaktieren. Der motorische Antrieb der Übersetzungs-Planeten 28 bewirkt somit zusätzlich zu der Rotation des Übersetzungs-Hohlrades 30 eine gegenläufige Rotation der Übersetzungs-Sonne 34, wobei sich die Drehzahlverhältnisse zwischen Übersetzungs-Hohlrad 30 und Übersetzungs-Sonne 34 aus dem Verhältnis der jeweiligen Kontaktradien zwischen Übersetzungs-Planeten 28 und Übersetzungs-Hohlrad 30 einerseits und Übersetzungs-Planeten 28 und Übersetzungs-Sonne 34 andererseits ergibt. Dieses Verhältnis, insbesondere der genaue Kontaktradius zwischen den Übersetzungs-Planeten 28 und der Übersetzungs-Sonne 34 ist in geringfügigem Maße variabel. Diese Variabilität dient in erster Linie nicht der Übersetzungseinstellung, sondern vielmehr der Schlupfoptimierung innerhalb der als Reibrollen-Planetenstufe ausgebildeten Übersetzungsstufe 26. Insbesondere ist bei der dargestellten Ausführungsform eine drehmomentabhängige, insbesondere drehmomentproportionale Schlupfsteuerung realisiert. Hierzu ist jeweils axial außen benachbart zu den Außensonnenscheiben 38, 40 eine Stirnnockenanpressscheibe 46 angeordnet, die fest mit der Innensonnenscheibe 36 verbunden ist. Jede Außensonnenscheibe 38, 40 stützt sich über in Rampen geführte Abstandselemente 48 gegen die jeweils zugeordnete Stirnnockenanpressscheibe 46 ab. Ein beim motorischen Antrieb der Übersetzungs-Planeten 28 zwischen der Innensonnenscheibe 36 und den Außensonnenscheiben 38, 40 auftretendes Relativmoment führt zu einer Relativverdrehung der Außensonnenscheiben 38, 40 zu ihrer jeweils zugeordneten Stirnnockenanpressscheibe, was aufgrund der Rampenführung der Abstandselemente 48 zu einer entsprechenden Axialverschiebung der jeweiligen Außensonnenscheibe 38, 40 führt. Hierdurch wird der Kontaktdruck zwischen der Übersetzungs-Sonne 34 und den Übersetzungs-Planeten 28 abhängig vom übertagenden Drehmoment, insbesondere proportional zu diesem eingestellt. Aufgrund der Schräge der Kontaktbereiche 42, 44 zwischen Übersetzungs-Sonne 34 und Übersetzungs-Planeten 28 führt dies zusätzlich zu einer leichten radialen Verschiebung der Übersetzungs-Planeten 28 und damit zu einer entsprechenden Kontaktdruckänderung im Kontaktbereich 32 zwischen Übersetzungs-Planeten 28 und Übersetzungs-Hohlrad 30. Dieser Übersetzungsbereich ist bevorzugt axial flach gehalten, sodass sich auch bei einer leichten axialen Verschiebung der Übersetzungs-Planeten 28 keine Änderung bzgl. des Kontaktdruckes oder des Kontaktradius zwischen Übersetzungs-Planeten 28 und Übersetzungs-Hohlrad 30 ergibt.

Die Bedeutung der doppelten Ausführung der Außensonnenscheiben 38, 40 erschließt sich insbesondere aus der Darstellung von Figur 2. Bei der dargestellten Ausführungsform sind nämlich drei der sechs elektrischen Maschinen 12 mit einer kürzeren Rotorwelle 18 und die drei übrigen elektrischen Maschinen 12 mit einer längeren Rotorwelle 18 ausgestattet. Entsprechend weiter bzw. weniger weit reichen sie in die Übersetzungsstufe 26 hinein, sodass jeweils zwei einander azimutal benachbarte Übersetzungs-Planeten 28 mit derselben Innensonnenscheibe 36, jedoch mit unterschiedlichen Außensonnenscheiben 38, 40 interagieren. Diese gruppenweise Zusammenwirkung von je drei elektrischen Maschinen 12, wie in den Figuren dargestellt, ist besonders vorteilhaft, jedoch nicht zwingend erforderlich.

Wie erwähnt ist die Kontaktdrucksteuerung zwischen Übersetzungs-Sonne 34 und Übersetzungs-Planeten 28 mit einer geringfügigen axialen und radialen Verschiebung der letzteren verbunden. Dies ist insofern nicht unproblematisch, als sie fest auf den Rotorwellen 18 der elektrischen Maschinen 12 fixiert sind. Die genannte Bewegung setzt sich somit auch auf die jeweilige Rotorwelle 18 fort, was bei deren Lagerung berücksichtigt werden sollte.

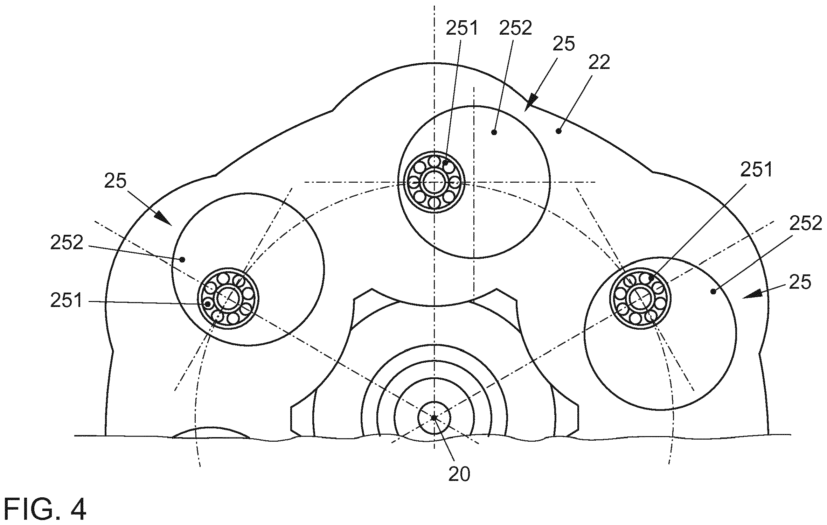

Die auf der der Übersetzungsstufe 26 abgewandten Seite der elektrischen Maschinen 12 positionierten Lager 24 sind als Los-Kugellager ausgebildet. Sie nehmen radiale Kräfte auf, setzen jedoch weder axialen Kräften noch einem Kippmoment einen Widerstand entgegen. Dies ist hinreichend, da der Lagerort des Lagers 24 als Drehpunkt einer Kippbewegung angesehen werden kann, die aus einer Radialverschiebung des zugeordneten Übersetzungs-Planeten 28 resultiert. Im Gegensatz dazu müssen die auf der der Übersetzungsstufe 26 zugewandten Seite der elektrischen Maschinen gelegenen Lager 25 einen radialen Freiheitsgrad aufweisen. Allerdings müssen sie gleichzeitig Kräfte in - auf den Motorenring bezogen - tangentialer Richtung aufnehmen. Sie sind daher, wie insbesondere aus den Figuren 3 und 4 ersichtlich, als Exzenterlager 25 ausgebildet. Die Exzenterlager 25 der dargestellten Ausführungsform umfassen jeweils ein Kugellager 251, welches exzentrisch in einer Lagerscheibe 252 fixiert ist, die ihrerseits drehbar in einem Deckel des Gehäuses 22 gelagert ist. Die Exzentrizität des Exzenterlagers 25, d.h. der gerichtete Abstand zwischen dem Zentrum des Kugellagers 251 und der Lagerscheibe 252, ist - bezogen auf den Motorenring - in tangentialer Richtung ausgerichtet. Eine im Rahmen der Kontaktdruckanpassung erfolgte Radialverschiebung der Übersetzungs-Planeten 28 führt somit zu einer - bezogen auf die Lagerscheibe 252 - tangentenparallelen Versetzung, d.h. einer Kreisschiebung des Kugellagers 251. Aufgrund der Geringfügigkeit der im Rahmen der Kontaktdruckanpassung auftretenden Verschiebungen kann diese Bewegung als linear angesehen werden; ihr eigentlicher Kreisbahncharakter kann vernachlässigt werden.

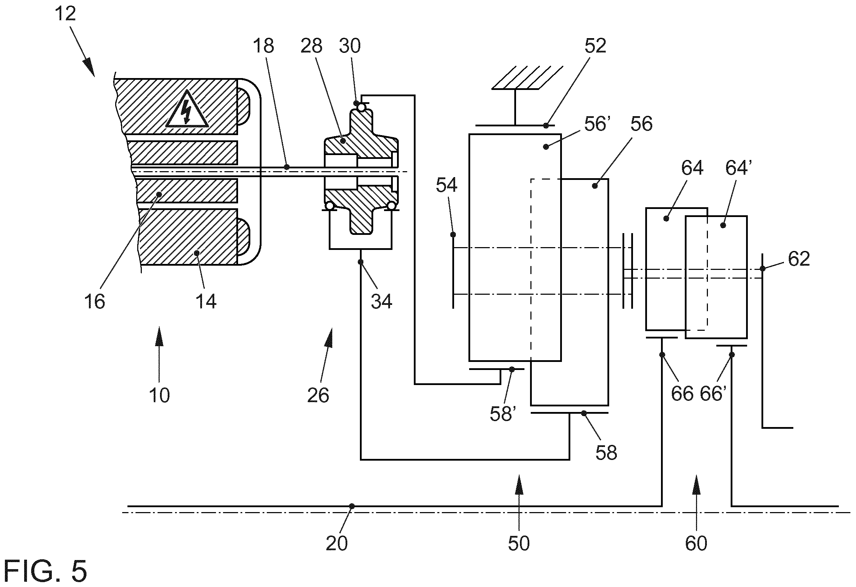

Figur 5 zeigt die Motoranordnung 10 und die Übersetzungsstufe 26 in stark vereinfachter Darstellung, um deren Ankopplung an nachfolgende Abtriebselemente einer Kraftfahrzeug-Antriebsanordnung zu illustrieren. Wie oben ausführlich erläutert, dienen das Übersetzungs-Hohlrad 30 und die Übersetzungs-Sonne 34 als Ausgangselemente der Übersetzungsstufe 26. Sie sind gekoppelt mit den Eingangselementen einer nachfolgenden Summierstufe 50, die in Form eines vorzugsweise stirnverzahnten Ravigneaux-Satzes ausgestaltet ist. Dieser weist ein gehäusefestes Summier-Hohlrad 52 und einen Summier-Steg 54 auf, auf dem zwei Sätze von Summier-Planeten 56, 56', die miteinander kämmen, gelagert sind. Die Summier-Planetensätze 56, 56' kämmen weiter mit zwei Summier-Sonnen 58, 58', die als Eingangselemente der Summierstufe 50 dienen und entsprechend mit der Übersetzungs-Sonne 34 bzw. dem Übersetzungs-Hohlrad 30 verbunden sind. Die Summierstufe 50 dient der Zusammenführung der unterschiedlichen Drehzahlen und Drehmomente, die an dem Übersetzungs-Hohlrad 30 und der Übersetzungs-Sonne 34 anliegen.

Zur Weiterleitung der in der Summierstufe 50 aufsummierten Drehbewegung ist bei der Ausführungsform von Figur 5 ein Stirnraddifferential 60 vorgesehen, welches in üblicher Bauweise mit einem Differential-Steg 62 ausgebildet ist, auf dem zwei Sätze von Differential-Planeten 64, 64', die miteinander kämmen, gelagert sind. Die Differential-Planetensätze 64, 64' kämmen mit zwei Differential-Sonnen 66, 66', die als Ausgangselemente des Differentials 60 dienen und jeweils mit einem in Figur 5 nicht näher dargestellten Antriebsrad eines Kraftfahrzeugs verbunden sind. Bei der in Figur 5 dargestellten, besonders bevorzugten Ausführungsform bilden der Summier-Steg 54 und der Differential-Steg 62 ein gemeinsames Bauteil mit unterschiedlichen Axialabschnitten, in deren einem die Summier-Planeten 56, 56' und in deren anderem die Differential-Planeten 64, 64' gelagert sind.

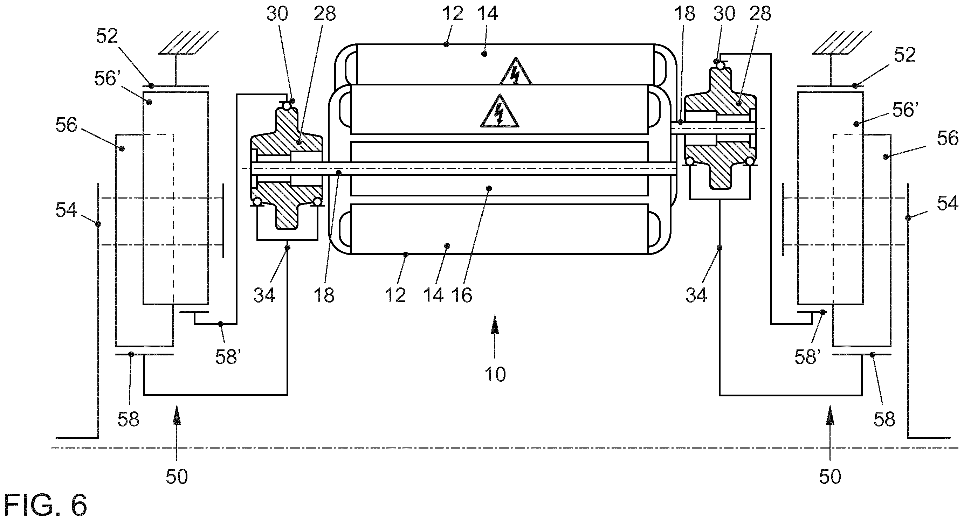

Figur 6 zeigt eine alternative Ausgestaltung einer Antriebsanordnung für ein Kraftfahrzeug, die insbesondere auf ein Differential 60 verzichtet. Im Gegensatz zu der Darstellung der Figuren 2 und 3 sind bei dieser Ausführungsform die elektrischen Maschinen 12 gruppenweise antiparallel zueinander orientiert, sodass beiderseits des Motorenings eine Übersetzungsstufe und eine sich daran anschließende Summierstufe 50 angeordnet werden kann. Diese Anordnung ist in Figur 6 gezeigt. Jeder der beiden Summier-Stege 54 bildet somit ein unabhängiges Ausgangselement der Antriebsanordnung, welches mit einem unmittelbar angetriebenen Antriebsrad des Kraftfahrzeugs verbunden ist. Sämtliche Differentialfunktionen und auch darüber hinausgehende Funktionen, wie das sogenannte Torque-Vectoring lassen sich durch entsprechende Ansteuerung der Motorgruppen realisieren. Selbstverständlich wäre es auch möglich, jeder der beiden Summierstufen 50 der Anordnung von Figur 6 ein eigenes Differential 60 nachzuschalten und so zwei unabhängig voneinander angetriebene Achsen zu realisieren.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben.

### Bezugszeichenliste

- 10: Motoranordnung/Motorenring
- 12: elektrische Maschine
- 14: Stator von 12
- 16: Rotor von 12
- 18: Rotorwelle
- 20: Zentralachse
- 22: Gehäuse
- 24: Lager (Loslager)
- 25: Lager (Exzenterlager)
- 251: Kugellager
- 252: Exzenterscheibe
- 26: Übersetzungsstufe
- 28: Übersetzungs-Planet
- 30: Übersetzungs-Hohlrad
- 32: Kontaktbereich 28/30
- 34: Übersetzungs-Sonne
- 36: Innensonnenscheibe
- 38: Außensonnenscheibe
- 40: Außensonnenscheibe
- 42: Kontaktbereich 36/40
- 44: Kontaktbereich 36/38
- 46: Stirnnockanpressscheibe
- 48: Abstandselement
- 50: Summierstufe
- 52: Summier-Hohlrad
- 54: Summier-Steg
- 56, 56': Summier-Planet
- 58, 58': Summier-Sonne
- 60: Differential
- 62: Differential-Steg
- 64, 64': Differential-Planet
- 66, 66': Differential-Sonne

## Patentansprüche

1. Elektrischer Antrieb, umfassend
- eine Motoranordnung (10) mit einer Mehrzahl elektrischer Maschinen (12),
- eine Abtriebsanordnung und
- eine einerseits mit der Motoranordnung (10) und andererseits mit der Abtriebsanordnung verbundene Übersetzungsstufe mit einer mit der Abtriebsanordnung verbundenen Übersetzungs-Sonne (34) und einer Mehrzahl jeweils mit einer der elektrischen Maschinen (12) verbundener Übersetzungs-Planeten (28), die ringförmig um die Übersetzungs-Sonne (34) angeordnet sind und drehmomentübertragend an ihr abwälzen,
**dadurch gekennzeichnet, dass**
- die Übersetzungsstufe ein rotierbar gelagertes Übersetzungs-Hohlrad (30) aufweist, an dem die Übersetzungs-Planeten (28) drehmomentübertragend abwälzen, und
- die Abtriebsanordnung eine Summierstufe (50) aufweist, die ausgebildet ist als ein Ravigneaux-Satz mit einem gehäusefesten Summier-Hohlrad (52), mit einem Summier-Steg (54), auf dem zwei miteinander kämmende Sätze von Summier-Planeten (56, 56'), von denen einer mit dem Summier-Hohlrad (52) kämmt, drehbar gelagert sind, und mit zwei Summier-Sonnen (58, 58'), von denen je eine mit einem der Summier-Planetensätze (56, 56') kämmt,
wobei das Übersetzungs-Hohlrad (30) fest mit der einen Summier-Sonne (58') verbunden ist und die Übersetzungs-Sonne (34) fest mit der anderen Summier-Sonne (58) verbunden ist.

2. Elektrischer Antrieb nach Anspruch 1,
**dadurch gekennzeichnet,**
**dass** die Übersetzungsstufe als Reibrollengetriebe ausgebildet ist.

3. Elektrischer Antrieb nach einem der vorangehenden Ansprüche,
**dadurch gekennzeichnet,**
**dass** das Übersetzungs-Hohlrad (30) mit derjenigen Summier-Sonne (58') verbunden ist, die mit demjenigen Summier-Planetensatz (56') kämmt, welcher mit dem Summier-Hohlrad (52) kämmt.

4. Elektrischer Antrieb nach einem der vorangehenden Ansprüche,
**dadurch gekennzeichnet,**
**dass** der Summier-Steg (54) als Ausgangselement der Summierstufe (50) mit einem Eingangselement eines Differentials (60) verbunden ist, dessen zwei Ausgangselemente (66, 66') mit Antriebsrädern einer angetriebenen Achse eines Kraftfahrzeugs verbunden sind.

5. Elektrischer Antrieb nach Anspruch 4,
**dadurch gekennzeichnet,**
**dass** das Differential (60) ein Stirnrad-Differential ist, dessen Eingangselement als ein Differential-Steg (62) ausgebildet ist, auf dem zwei Sätze miteinander kämmender Differential-Planeten (64, 64') drehbar gelagert sind, wobei jeder Differential-Planetensatz (64, 64') mit einem der als Differential-Sonnen (66, 66') ausgebildeten Ausgangselemente des Differentials (60) kämmt.

6. Elektrischer Antrieb nach dem Anspruch 5,
**dadurch gekennzeichnet,**
**dass** die Summierstufe (50) über ihren Summier-Steg (54) mit dem Differential-Steg (62) verbunden ist.

7. Elektrischer Antrieb nach dem Anspruch 6,
dass die Summier-Planeten (56, 56') und die Differential-Planeten (64, 64') auf zwei beabstandeten Axialbereichen eines gemeinsamen Steges (54/62) gelagert sind.

8. Elektrischer Antrieb nach einem der Ansprüche 1 bis 3,
**dadurch gekennzeichnet,**
**dass** der Summier-Steg (54) als Ausgangselement der Summierstufe (50) mit einem Antriebsrad eines Kraftfahrzeugs verbunden sind.

9. Antriebsanordnung für ein Kraftfahrzeug, umfassend zwei antiparallel zueinander ausgerichtete elektrische Antriebe nach Anspruch 8, deren Summierstufen (50) jeweils mit einem Antriebsrad des Kraftfahrzeugs verbunden sind.

## Claims

1. Electric drive, comprising
- a motor arrangement (10) with a plurality of electric machines (12),
- an output arrangement, and
- a transmission stage which is connected on one side to the motor arrangement (10) and on the other side to the output arrangement, with a transmission sun (34) which is connected to the output arrangement, and a plurality of transmission planets (28) which are connected in each case to one of the electric machines (12), are arranged in an annular manner around the transmission sun (34), and roll on the latter in a torque-transmitting manner,
**characterized in that**
- the transmission stage has a rotatably mounted transmission internal gear (30), on which the transmission planets (28) roll in a torque-transmitting manner, and
- the output arrangement has a summing stage (50) which is configured as a Ravigneaux set with a summing internal gear (52) which is fixed to the housing, with a summing spider (54) on which two sets of summing planets (56, 56') which mesh with one another and of which one meshes with the summing internal gear (52) are mounted rotatably, and with two summing suns (58, 58'), of which in each case one meshes with one of the summing planetary sets (56, 56'),
the transmission internal gear (30) being connected fixedly to the one summing sun (58'), and the transmission sun (34) being connected fixedly to the other summing sun (58).

2. Electric drive according to Claim 1, **characterized in that** the transmission stage is configured as a friction roller mechanism.

3. Electric drive according to either of the preceding claims, **characterized in that** the transmission internal gear (30) is connected to that summing sun (58') which meshes with that summing planetary set (56') which meshes with the summing internal gear (52).

4. Electric drive according to one of the preceding claims, **characterized in that**, as output element of the summing stage (50), the summing spider (54) is connected to an input element of a differential (60), the two output elements (66, 66') of which are connected to drive wheels of a driven axle of a motor vehicle.

5. Electric drive according to Claim 4, **characterized in that** the differential (60) is a spur gear differential, the input element of which is configured as a differential spider (62), on which two sets of differential planets (64, 64') which mesh with one another are mounted rotatably, each differential planetary set (64, 64') meshing with one of the output elements of the differential (60) which are configured as differential suns (66, 66').

6. Electric drive according to Claim 5, **characterized in that** the summing stage (50) is connected via its summing spider (54) to the differential spider (62).

7. Electric drive according to Claim 6, in that the summing planets (56, 56') and the differential planets (64, 64') are mounted on two spaced-apart axial regions of a common spider (54/62).

8. Electric drive according to one of Claims 1 to 3, **characterized in that**, as output element of the summing stage (50), the summing spider (54) are connected to a drive wheel of a motor vehicle.

9. Drive arrangement for a motor vehicle, comprising two electric drives according to Claim 8 which are oriented in an antiparallel manner with respect to one another and the summing stages (50) of which are connected in each case to a drive wheel of the motor vehicle.

## Revendications

1. Entraînement électrique, comprenant :
- un agencement de moteur (10) comprenant une pluralité de machines électriques (12),
- un agencement de prise de force et
- un étage de démultiplication connecté d'une part à l'agencement de moteur (10) et d'autre part à l'agencement de prise de force, comprenant une roue solaire de démultiplication (34) connectée à l'agencement de prise de force et une pluralité de satellites de démultiplication (28) connectés chacun à une des machines électriques (12), lesquels sont disposés sous forme annulaire autour de la roue solaire de démultiplication (34) et roulent sur elle en transmettant le couple,
**caractérisé en ce que**
- l'étage de démultiplication présente une couronne dentée de démultiplication supportée à rotation (30), sur laquelle roulent les satellites de démultiplication (28) en transmettant le couple, et
- l'agencement de prise de force présente un étage sommateur (50) qui est réalisé sous forme d'ensemble de Ravigneaux avec une couronne dentée sommatrice (52) fixée au boîtier, avec un porte-satellites sommateur (54) sur lequel sont supportés à rotation deux jeux de satellites sommateurs (56, 56') s'engrenant l'un dans l'autre, dont l'un s'engrène avec la couronne dentée sommatrice (52), et avec deux roues solaires sommatrices (58, 58') dont l'une s'engrène avec l'un des trains planétaires sommateurs (56, 56'), respectivement,
la couronne dentée de démultiplication (30) étant connectée fixement à l'une des roues solaires sommatrices (58') et la roue solaire de démultiplication (34) étant connectée fixement à l'autre roue solaire sommatrice (58).

2. Entraînement électrique selon la revendication 1,
**caractérisé en ce que**
l'étage de démultiplication est réalisé sous forme de transmission à rouleaux de friction.

3. Entraînement électrique selon l'une quelconque des revendications précédentes,
**caractérisé en ce que**
la couronne dentée de démultiplication (30) est connectée à la roue solaire sommatrice (58') qui s'engrène avec le train planétaire sommateur (56') qui s'engrène avec la couronne dentée sommatrice (52) .

4. Entraînement électrique selon l'une quelconque des revendications précédentes,
**caractérisé en ce que**
le porte-satellites sommateur (54), en tant qu'élément de sortie de l'étage sommateur (50), est connecté à un élément d'entrée d'un différentiel (60) dont les deux éléments de sortie (66, 66') sont connectés à des roues motrices d'un essieu moteur d'un véhicule automobile.

5. Entraînement électrique selon la revendication 4, **caractérisé en ce que**
le différentiel (60) est un différentiel à pignons droits dont l'élément d'entrée est réalisé sous forme de porte-satellites de différentiel (62) sur lequel sont supportés à rotation deux jeux de satellites différentiels s'engrenant les uns dans les autres (64, 64'), chaque jeu de satellites différentiels (64, 64') s'engrenant avec l'un des éléments de sortie du différentiel (60) réalisés sous forme de roues solaires de différentiel (66, 66').

6. Entraînement électrique selon la revendication 5,
**caractérisé en ce que**
l'étage sommateur (50) est connecté par le biais de son porte-satellites sommateur (54) au porte-satellites de différentiel (62).

7. Entraînement électrique selon la revendication 6, en ce que
les satellites sommateurs (56, 56') et les satellites de différentiel (64, 64') sont supportés sur deux régions axiales espacées d'un porte-satellites commun (54/62).

8. Entraînement électrique selon l'une quelconque des revendications 1 à 3,
**caractérisé en ce que**
le porte-satellites sommateur (54), en tant qu'élément de sortie de l'étage sommateur (50), sont connecté à une roue motrice d'un véhicule automobile.

9. Agencement d'entraînement pour un véhicule automobile, comprenant deux entraînements électriques orientés de manière antiparallèle l'un par rapport à l'autre selon la revendication 8, dont les étages sommateurs (50) sont à chaque fois connectés à une roue motrice du véhicule automobile.
